# FASCICULE DE BREVET EUROPEEN

(11) **EP 0 694 154 B1**
(45) Date de publication et mention de la délivrance du brevet: **05.11.1997**
(21) Numéro de dépôt: 95910577.6
(22) Date de dépôt: 21.02.1995
(51) Int. Cl.: F28G 1/12

(54) **DISPOSITIF D'INTERCEPTION POUR ELEMENTS SOLIDES CIRCULANT DANS UN ECHANGEUR DE CHALEUR POUR LE NETTOYAGE DE CELUI-CI**
EINRICHTUNG ZUM AUFFANGEN VON IN EINEM WÄRMETAUSCHER ZIRKULIERENDEN REINIGUNGSKÖRPERN
DEVICE FOR RECOVERING SOLID CLEANING MATERIALS CIRCULATING THROUGH A HEAT EXCHANGER

(30) Priorité: 24.02.1994 FR 9402109
(43) Date de publication de la demande: 31.01.1996
(73) Titulaire: E. BEAUDREY & Cie., F-75018 Paris (FR)
(72) Inventeur: JACKSON, Philip, F-75007 Paris (FR)
(74) Mandataire: CABINET BONNET-THIRION
(86) Numéro de dépôt international: FR9500199
(87) Numéro de publication internationale: WO9523321

(56) Documents cités:
- DE-A- 3 140 803
- DE-A- 4 029 437
- DE-U- 8 526 836
- FR-A- 2 609 644

## Description

La présente invention concerne d'une manière générale les échangeurs de chaleur, et, par exemple, les échangeurs de chaleur tubulaires formant condenseur, dont le nettoyage se fait en continu par des éléments solides, en pratique en forme de boule et réalisés par exemple en caoutchouc mousse, véhiculés par l'un des flux concernés, suivant des dispositions connues dans leur principe depuis longtemps par le brevet américain No 1 795 348.

Elle vise plus particulièrement le dispositif d'interception qu'il est nécessaire de disposer sur la canalisation de sortie de cet échangeur de chaleur pour y récupérer ces éléments solides de nettoyage et les réinjecter dans sa canalisation d'entrée.

Ce dispositif d'interception comporte, globalement, dans une manchette, des moyens de filtration propres à la retenue recherchée.

A ce jour, et suivant diverses modalités pratiques de réalisation, ces moyens de filtration sont usuellement formés de deux grilles plates, qui, en position de service, ferment transversalement la manchette, en formant l'une avec l'autre dans celle-ci un dièdre d'arête perpendiculaire à son axe et orientée vers l'aval, et qui, en pratique, sont chacune individuellement montées pivotantes dans leur zone médiane autour d'axes parallèles à cette arête pour pouvoir occuper l'une ou l'autre de deux autres positions, à savoir une position de nettoyage, qui est inverse de leur position de service, et pour laquelle elles peuvent être soumises à un contre-courant de lavage, et une position neutre, qui est intermédiaire entre leur position de service et leur position de nettoyage, et pour laquelle, disposées dans le fil du courant, elles sont en pratique hors service.

Pour un roulement convenable sur elles des éléments solides de nettoyage en direction de moyens de recueil prévus pour ceux-ci le long de leur arête, ces grilles font nécessairement un angle d'inclinaison relativement faible par rapport à l'axe de la manchette en position de service.

Il en résulte que, pour leur logement, cette manchette a nécessairement une longueur relativement importante.

En pratique, cette longueur est toujours supérieure au diamètre de la manchette, en atteignant parfois 1,5 fois celui-ci.

L'installation d'un dispositif d'interception ainsi équipé de telles grilles peut s'en trouver malaisée, voire même interdite de manière économique, notamment dans certaines installations préexistantes dans lesquelles n'est disponible qu'une faible longueur de canalisation entre la sortie de l'échangeur de chaleur et l'ouvrage maçonné sur lequel repose celui-ci.

Fondée sur l'existence de filtres à roue du type de ceux faisant l'objet du brevet français qui, déposé le 16 janvier 1987 sous le No 87 00430, a été publié sous le No 2 609 644, la présente invention a pour objet un dispositif d'interception qui, propre à la collecte d'éléments solides circulant dans un échangeur de chaleur pour le nettoyage de celui-ci, ne présente axialement qu'un encombrement avantageusement réduit, lui permettant d'être implanté sur une longueur de canalisation faible, tout en ayant une capacité fonctionnelle équivalente à celle des dispositifs d'interception comparables déjà existants et tout en présentant d'autres avantages par rapport à ceux-ci.

Ce dispositif d'interception, qui est du genre comportant, dans une manchette à interposer sur la canalisation de sortie de l'échangeur de chaleur à équiper, des moyens de filtration propres à la retenue des éléments solides de nettoyage circulant dans celui-ci, est d'une manière générale caractérisé en ce que ces moyens de filtration comportent, d'une part, une roue, qui, fermant transversalement la manchette, comporte annulairement, entre son axe et sa périphérie, un panneau filtrant, et, d'autre part, deux trompes, qui, disposées chacune respectivement de part et d'autre de la roue, l'une en aval dans le sens du flux sortant, l'autre en amont, sont établies en correspondance l'une avec l'autre et sont l'une et l'autre tournées vers le panneau filtrant de cette roue, en coopération avec une rotation relative de la roue par rapport aux trompes et des moyens de circulation propres à engendrer localement, au droit de ces trompes, une circulation à contre-courant à travers le panneau filtrant de cette roue.

En pratique, l'encombrement axial de ce dispositif d'interception ne nécessite le plus souvent qu'une longueur de canalisation de l'ordre d'un demi-diamètre.

En pratique, également, les moyens de circulation mis en oeuvre, qui sont nécessaires pour impulser une circulation à contre-courant à travers le panneau filtrant de la roue de la trompe disposée en aval de celle-ci à la trompe disposée en amont en surmontant les pertes de charge correspondantes, peuvent par exemple comporter une pompe dont le refoulement est raccordé à la trompe disposée en aval, ou, en variante, comporter deux conduites qui, raccordées l'une à la trompe disposée en aval, l'autre à la trompe disposée en amont, plongent très simplement l'une et l'autre par un coude dans la canalisation d'entrée de l'échangeur de chaleur, avec le coude de la première tourné vers l'amont et celui de la seconde tourné vers l'aval, en bénéficiant ainsi de la pression motrice dans cette canalisation d'entrée.

Mais, lorsqu'ils comportent une pompe, cette pompe peut avantageusement être une pompe classique, à la différence des dispositifs d'interception déjà existants dans lesquels, faisant circuler non seulement le fluide porteur mais également les éléments solides de nettoyage véhiculés par celui-ci, et fonctionnant en outre en dépression, la pompe équivalente est, nécessairement, et de manière dispendieuse, une pompe spéciale.

Les caractéristiques et avantages de l'invention ressortiront d'ailleurs de la description qui va suivre, à titre d'exemple, en référence aux dessins schématiques annexés sur lesquels :
la figure 1 est une vue en élévation-coupe d'un échangeur de chaleur équipé d'un dispositif d'interception suivant l'invention ;
la figure 2 est, à échelle supérieure, une vue en perspective de ce dispositif d'interception ;
la figure 3 en est, à échelle encore supérieure, une vue en coupe axiale, suivant la ligne III-III de la figure 2 ;
la figure 4 en est une vue partielle en plan, suivant la flèche IV de la figure 3 ;
la figure 5 en est une vue partielle en coupe transversale, suivant la ligne V-V de la figure 3 ;
la figure 6 est une vue en élévation-coupe qui, reprenant pour partie celle de la figure 1, se rapporte à une variante de réalisation.

Ces figures illustrent à titre d'exemple l'application de l'invention à un échangeur de chaleur 10 tubulaire et formant condenseur.

De manière connue en soi, cet échangeur de chaleur 10 comporte un corps d'échange 11 dans lequel intervient une batterie de tubes 12 établis parallèlement les uns aux autres d'une plaque tubulaire d'entrée 13E à une plaque tubulaire de sortie 13S.

Pour la circulation d'un fluide de refroidissement dans les tubes 12, en l'espèce de l'eau, il est prévu, en amont, une boite à eau d'entrée 14E, que dessert une canalisation d'entrée 15E, et, en aval, une boîte à eau de sortie 14S, qui dessert une canalisation de sortie 15S.

Pour la circulation du fluide à refroidir, en l'espèce de la vapeur à condenser, le corps d'échange 11 comporte par ailleurs une entrée 16 et une sortie 17.

Ces dispositions sont bien connues par elles-mêmes, et, ne relevant pas en propre de la présente invention, elles ne seront pas décrites plus en détail ici.

De manière également connue en soi, des éléments solides 18 sont systématiquement mis en circulation dans l'échangeur de chaleur 10 pour le nettoyage de celui-ci, et, plus précisément, pour celui de ses tubes 12.

Il s'agit, en pratique, de boules en caoutchouc mousse, dont le diamètre D1 est légèrement supérieur à celui des tubes 12, et dont la densité, à l'état imprégné, est similaire à celle de l'eau.

Ces éléments solides 18 sont systématiquement injectés en amont, dans la canalisation d'entrée 15E, et, pour leur recyclage, il est mis en oeuvre, sur la canalisation de sortie 15S, un dispositif d'interception 20.

Globalement, ce dispositif d'interception 20 comporte, dans une manchette 21 à interposer par des brides 22 sur la canalisation de sortie 15S, des moyens de filtration 24 propres à la retenue des éléments solides 18 à intercepter.

Suivant l'invention, les moyens de filtration 24 comportent, d'une part, une roue 25, qui, fermant transversalement la manchette 21, comporte, annulairement, entre son axe et sa périphérie, un panneau filtrant 26, et, d'autre part, deux trompes 27S, 27E, qui, disposées chacune respectivement de part et d'autre de la roue 25, l'une en aval dans le sens du flux sortant par la canalisation de sortie 15S, l'autre en amont, sont établies en correspondance l'une avec l'autre et sont l'une et l'autre tournées vers le panneau filtrant 26 de cette roue 25, en coopération avec, suivant des modalités décrites plus en détail ultérieurement, une rotation relative de la roue 25 par rapport aux trompes 27S, 27E et des moyens de circulation 28 propres à engendrer localement, au droit de ces trompes 27S, 27E, une circulation à contre-courant à travers le panneau filtrant 26 de cette roue 25.

Dans les formes de réalisation représentées, la roue 25 est montée rotative dans la manchette 21, coaxialement avec celle-ci, et les trompes 27S, 27E sont fixes dans cette manchette 21.

Mais, en variante, une disposition inverse est envisageable.

Dans les formes de réalisation représentées, la roue 25 est implantée sensiblement à mi-hauteur dans la manchette 21, et elle comporte un moyeu 30, qui s'étend suivant l'axe A de cette manchette 21, et une jante 31, qui s'étend au voisinage de la paroi latérale de celle-ci.

Le panneau filtrant 26 s'étend entre le moyeu 30 et la jante 31, du côté de la périphérie aval de celle-ci.

Dans les formes de réalisation représentées, le volume interne que la roue 25 présente ainsi en amont de son panneau filtrant 26 est fragmenté circulairement en compartiments 32, modulaires et triangulaires, par des cloisons radiales 33 qui, de même hauteur H1 que le moyeu 30 et la jante 31, s'étendent en continu de ce moyeu 30 à cette jante 31.

Préférentiellement, la hauteur H1 de ces cloisons radiales 33 est un multiple du diamètre D1 des éléments solides 18 de nettoyage.

Par exemple, cette hauteur H1 est égale à deux ou trois fois ce diamètre D1.

Préférentiellement, également, le nombre de compartiments 32 de la roue 25 est relativement élevé.

En pratique, il est le plus élevé possible.

Par exemple, il est supérieur à trente.

Par un bout d'arbre 35 solidaire de son moyeu 30, la roue 25 est montée rotative dans une douille 36 que des bras radiaux 37 relient à la paroi latérale de la manchette 21.

Par une couronne 38 solidaire de sa jante 31, la roue 25 engrène, dans les formes de réalisation représentées, avec un pignon 39 qui, à l'extérieur de la manchette 21, est calé sur l'arbre de sortie d'un moteur 40 par l'intermédiaire d'un réducteur 41.

Mais, en variante, l'entraînement de la roue 25, lorsque c'est elle qui est ainsi montée rotative, peut tout aussi bien se faire à l'aide d'une courroie, d'une chaîne ou de galets, ou de tout autre dispositif d'entraînement de type usuel.

Dans les formes de réalisation représentées, le panneau filtrant 26 est plat, et il s'étend globalement perpendiculairement à l'axe de la manchette 21.

Mais, en variante, il peut être plus ou moins bombé, et, par exemple, être globalement en forme de tronc de cône.

Par exemple, ce panneau filtrant 26 peut être du type de celui décrit dans le brevet français qui, déposé le 16 janvier 1987 sous le No 87 00430, a été publié sous le No 2 609 644, ou du type de celui décrit dans le brevet français qui, déposé le 27 août 1990, sous le No 90 10682, a été publié sous le No 2 666 027.

Mais, en variante, ce panneau filtrant 26 peut aussi bien être constitué d'une simple tôle perforée, d'une toile à fils tissés ou soudés, ou d'une grille à barreaux.

Dans les formes de réalisation représentées, la trompe 27S disposée en aval de la roue 25 est portée par la paroi latérale de la manchette 21, et, à l'extérieur de celle-ci, elle se raccorde à une conduite 42S par un embout 43S.

De même, la trompe 27E disposée en amont de la roue 25 est portée par la paroi latérale de la manchette 21, et, à l'extérieur de celle-ci, elle se raccorde à une conduite 42E par un embout 43E.

Ces deux trompes 27S, 27E s'étendent globalement parallèlement l'une à l'autre, en porte à faux à compter de la paroi latérale de la manchette 21, en direction de l'axe A de celle-ci, et elles ont globalement une même configuration en gouttière, avec leur concavité tournée vers le panneau filtrant 26 de la roue 25, et, en plan, un contour triangulaire équivalent à au moins une fois celui d'un compartiment 32 de celle-ci.

En pratique, dans les formes de réalisation représentées, les trompes 27S, 27E ont chacune en plan un contour triangulaire équivalent sensiblement à seulement une fois celui d'un compartiment 32, et, à leur extrémité libre, elles sont fermées transversalement par une cloison 44S, 44E.

Dans les formes de réalisation représentées, les trompes 27S, 27E sont chacune bordées latéralement, sur chacun de leurs côtés, par des déflecteurs 46S, 46E, pour éviter le passage, dans le le flux sortant traité, du flux entrant circulant à contre-courant à travers le panneau filtrant 26.

Ces déflecteurs 46S, 46E ont en plan un contour triangulaire équivalent à au moins une fois, et en pratique seulement une fois, celui d'un compartiment 32 de la roue 25.

De même, pour éviter un contournement de la roue 25 par le flux sortant traité, il est prévu, dans les formes de réalisation représentées, un joint d'étanchéité 48, qui, porté intérieurement par la paroi latérale de la manchette 21, s'étend jusqu'au voisinage immédiat de la jante 31 de la roue 25, du côté de la périphérie amont de cette jante 31.

Globalement, la manchette 21 a une hauteur H2 qui est inférieure à la moitié de son diamètre D2.

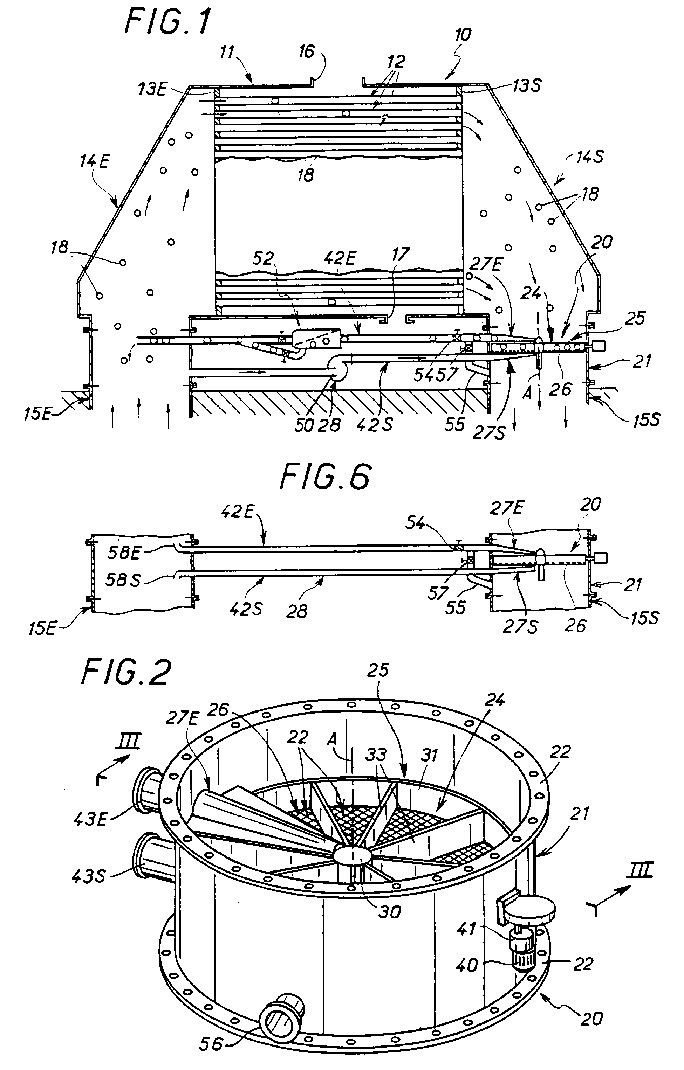

Dans la forme de réalisation plus particulièrement représentée sur les figures 1 à 5, les moyens de circulation 28 comportent une pompe 50, qui est interposée sur la conduite 42S, et dont le refoulement est raccordé par celle-ci à la trompe 27S disposée en aval de la roue 25.

En outre, dans cette forme de réalisation, l'aspiration de cette pompe 50 est raccordée, par la conduite 42S, à la canalisation d'entrée 15E de l'échangeur de chaleur 10.

Mais, en variante, et au prix d'une réduction minime de l'efficacité de l'échangeur de chaleur 10, cette aspiration de la pompe 50 peut tout aussi bien être raccordée par la conduite 42S à la canalisation de sortie 15S.

Conjointement, la trompe 27E disposée en amont de la roue 25 est raccordée par la conduite 42E à la canalisation d'entrée 15E de l'échangeur de chaleur 10, et, sur cette conduite 42E, est interposé, de manière connue en soi, un collecteur 52 pour le rassemblement éventuel des éléments solides 18 de nettoyage, en vue, par exemple, de leur changement.

Enfin, dans les formes de réalisation représentées, sur la conduite 42E que dessert la trompe 27E disposée en amont de la roue 25, est piquée, en amont d'une vanne 54 contrôlant cette conduite 42E, une tuyauterie de lavage 55, qui se raccorde à la manchette 21 par un embout 56, et qui est elle-même contrôlée par une vanne 57.

En service, la vanne 54 est ouverte, et la vanne 57 est fermée.

Par son panneau filtrant 26, la roue 25 arrête les éléments solides 18 de nettoyage sortant de la boite à eau de sortie 14S, et, compartiment 32 par compartiment 32, elle les transporte successivement au droit des trompes 27S, 27E.

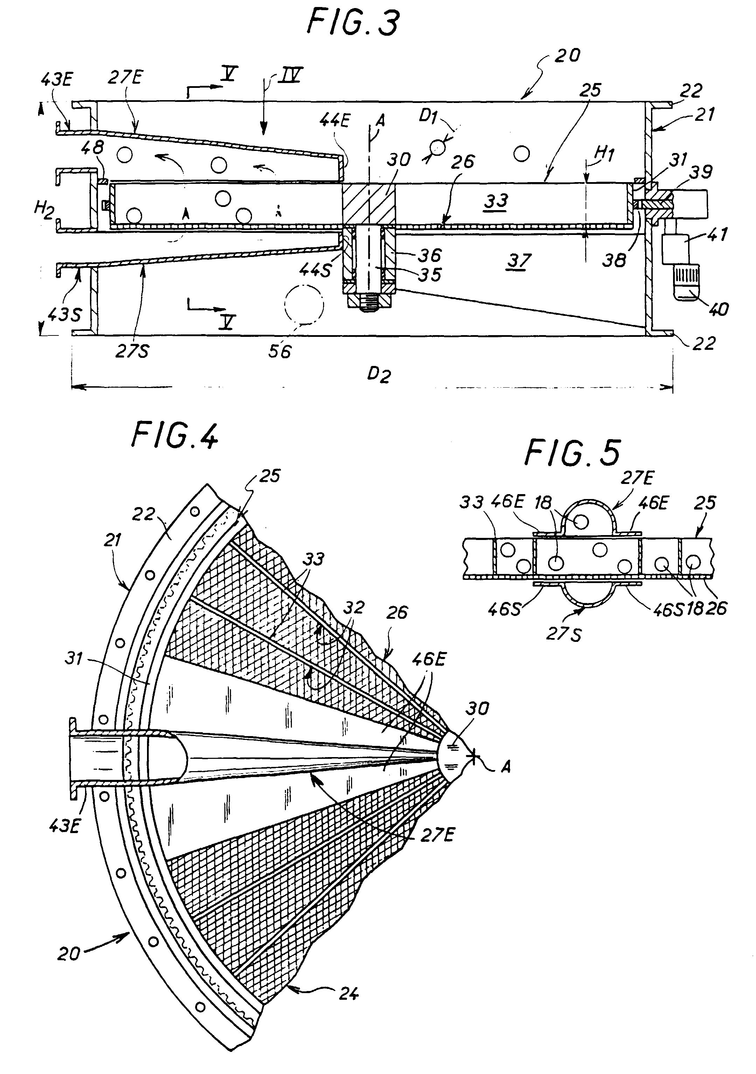

Du fait de la pression motrice induite par les moyens de circulation 28, il y a, au droit des trompes 27S, 27E, une circulation à contre-courant à travers le panneau filtrant 26, dont il résulte que, suivant les flèches F de la figure 3, les éléments solides 18 de nettoyage présents dans le compartiment 32 alors concerné de la roue 25 sont dirigés par la trompe 27E vers la conduite 42E desservie par cette trompe 27E, et, par celle-ci, vers la canalisation d'entrée 15E de l'échangeur de chaleur 10, où ils sont dûment remis en circulation, par injection dans cette canalisation d'entrée 15E.

Au cas où la quantité de débris graduellement arrêtés par le panneau filtrant 26 de la roue 25 deviendrait trop importante, et qu'il en résulterait une perte de charge trop élevée, il est procédé à un nettoyage de ce panneau filtrant 26.

Pour ce faire, les éléments solides 18 de nettoyage sont arrêtés par le collecteur 52, la vanne 54 est fermée, et la vanne 57 est ouverte.

Les moyens de circulation 28 induisent alors à travers le panneau filtrant 26 une circulation à contre-courant qui, par la trompe 27E et la tuyauterie de lavage 55, renvoie en aval, dans la canalisation de sortie 15S, et, donc, dans le flux sortant, les débris arrêtés, ce qui élimine dûment ceux-ci.

Dans la variante de réalisation illustrée par la figure 6, les moyens de circulation 28 comportent simplement les deux conduites 42S, 42E, qui sont raccordées l'une à la trompe 27S disposée en aval de la roue 25, l'autre à la trompe 27E disposée en amont de celle-ci, et ces conduites 42S, 42E plongent l'une et l'autre par un coude 58S, 58E dans la canalisation d'entrée 15E de l'échangeur de chaleur 10, avec le coude 58S de la première tourné vers l'amont et celui 58E de la seconde tourné vers l'aval.

La circulation recherchée résulte ainsi très simplement de la pression motrice due au flux entrant.

## Revendications

1. Dispositif d'interception pour éléments solides circulant dans un échangeur de chaleur pour le nettoyage de celui-ci, du genre comportant, dans une manchette (21) à interposer sur la canalisation de sortie (15S) dudit échangeur de chaleur (10), des moyens de filtration (24) propres à la retenue desdits éléments solides (18), caractérisé en ce que lesdits moyens de filtration (24) comportent, d'une part, une roue (25), qui, fermant transversalement la manchette (21), comporte, annulairement, entre son axe (A) et sa périphérie, un panneau filtrant (26), et, d'autre part, deux trompes (27S, 27E), qui, disposées chacune respectivement de part et d'autre de la roue (25), l'une en aval dans le sens du flux sortant, l'autre en amont, sont établies en correspondance l'une avec l'autre et sont l'une et l'autre tournées vers le panneau filtrant (26) de cette roue (25), en coopération avec une rotation relative de la roue (25) par rapport aux trompes (27S, 27E) et des moyens de circulation propres à engendrer localement, au droit de ces trompes (27S, 27E), une circulation à contre-courant à travers le panneau filtrant (26) de cette roue (25).

2. Dispositif d'interception suivant la revendication 1, caractérisé en ce que les moyens de circulation (28) comportent une pompe (50) dont le refoulement est raccordé à la trompe (27S) disposée en aval de la roue (25).

3. Dispositif d'interception suivant la revendication 2, caractérisé en ce que l'aspiration de la pompe (50) est raccordée à la canalisation d'entrée (15E) de l'échangeur de chaleur (10).

4. Dispositif d'interception suivant la revendication 1, caractérisé en ce que les moyens de circulation (28) comportent deux conduites (42S, 42E), qui, raccordées l'une à la trompe (27S) disposée en aval de la roue (25), l'autre à la trompe (27E) disposée en amont de celle-ci, plongent l'une et l'autre par un coude (58S, 58E) dans la canalisation d'entrée (15E) de l'échangeur de chaleur (10), avec le coude (58S) de la première tourné vers l'amont et celui (58E) de la seconde tourné vers l'aval.

5. Dispositif d'interception suivant l'une quelconque des revendications 1 à 4, caractérisé en ce que le volume interne de la roue (25) en amont de son panneau filtrant (26) est fragmenté circulairement en compartiments (32) par des cloisons radiales (33), et les trompes (27S, 27E) ont en plan un contour triangulaire équivalent sensiblement à une fois celui d'un tel compartiment (32).

6. Dispositif d'interception suivant l'une quelconque des revendications 1 à 5, caractérisé en ce que chacune des trompes (27S, 27E) est bordée latéralement par des déflecteurs (46E, 46S) ayant en plan un contour triangulaire équivalent à au moins une fois celui d'un compartiment (32) de la roue (25).

7. Dispositif d'interception suivant l'une quelconque des revendications 4 à 6, caractérisé en ce que, sur la conduite (42E) que dessert la trompe (27E) disposée en amont de la roue (25), est piquée, en amont d'une vanne (54) contrôlant cette conduite (42E), une tuyauterie de lavage (55), qui se raccorde à la manchette (21) en aval de la roue (25), et qui est elle-même contrôlée par une vanne (57).

8. Dispositif d'interception suivant l'une quelconque des revendications 1 à 7, caractérisé en ce que la roue (25) est montée rotative dans la manchette (21), et les trompes (27S, 27E) sont fixes dans celle-ci.

## Patentansprüche

1. Auffangvorrichtung für Festkörper, welche in einem Wärmetauscher zirkulieren, um diesen zu reinigen, des Types, umfassend in einer Manschette (21), welche zwischenzulagern ist an der Ausgangskanalisation (15S) des Wärmetauschers (10), eine Filtereinrichtung (24), vorgesehen zum Zurückhalten der Festkörper (18),
**dadurch gekennzeichnet**, daß die Filtereinrichtung (24) umfaßt einerseits ein transversalwärts die Manschette (21) verschließendes Rad (25), welches ringförmig zwischen der Achse (A) und der Peripherie ein Filterpaneel (26) aufweist, und andererseits zwei Röhren (27S, 27E), welche jeweils angeordnet sind beidseitig des Rades (25), eine, flußabwärtsliegend in der Richtung des austretenden Flusses, und die andere, flußaufwärtsliegend, wobei die Röhren ausgebildet sind entsprechend zueinander und jeweils hin zu dem Filterpaneel (26) des Rades (25) gerichtet, und zwar unter Wechselwirkung mit einer relativen Rotation des Rades (25) mit Bezug auf die Röhren (27S, 27E), wobei eine Zirkulationseinrichtung vorgesehen ist, geeignet zum Bewirken einer lokalen Gegenstromzirkulation an den Röhren (27S, 27E) durch das Filterpaneel (26) des Rades (25) hindurch.

2. Auffangvorrichtung nach Anspruch 1,
**dadurch gekennzeichnet**, daß die Zirkulationseinrichtung (28) eine Pumpe (50) umfaßt, deren Ablauf mit der Röhre (27S) verbunden ist, welche flußabwärtsliegend des Rades (25) vorgesehen ist.

3. Auffangvorrichtung nach Anspruch 2,
**dadurch gekennzeichnet,** daß die Ansaugseite der Pumpe (50) verbunden ist mit der Eingangskanalisation (15E) des Wärmetauschers (10).

4. Auffangvorrichtung nach Anspruch 1,
**dadurch gekennzeichnet**, daß die Zirkulationseinrichtung (28) zwei Leitungen (42S, 42E) umfaßt, welche verbunden sind einerseits mit der Röhre (27S), welche flußabwärtsliegend des Rades (25) angeordnet ist, und andererseits mit der Röhre (27E), welche flußaufwärtsliegend davon vorgesehen ist, jeweils über einen Krümmer (58S, 58E) in die Eingangskanalisation (15E) des Wärmetauschers (10) eintauchend, wobei der Krümmer (58S) der ersten flußaufwärtsliegend ausgerichtet ist, während jener (58E) der zweiten flußabwärtsliegend ausgerichtet ist.

5. Auffangvorrichtung nach einem der Ansprüche 1 bis 4,
**dadurch gekennzeichnet**, daß das Innenvolumen des Rades (25), flußaufwärtsliegend von dem Filterpaneel (26), kreisförmig aufgeteilt ist in Abteile (32) durch radiale Trennwände (33), wobei die Röhren (27S, 27E) in Aufsicht einen dreieckigen Umriß aufweisen, welcher praktisch äquivalent ist zu einem solchen Abteil (32).

6. Auffangvorrichtung nach einem der Ansprüche 1 bis 5,
**dadurch gekennzeichnet**, daß jede der Röhren (27S, 27E) lateralwärts umrandet ist von Deflektoren (46E, 46S), welche in Aufsicht einen dreieckförmigen Umriß aufweisen, äquivalent zu jeweils zumindest einem Abteil (32) des Rades (25).

7. Auffangvorrichtung nach einem der Ansprüche 4 bis 6,
**dadurch gekennzeichnet**, daß an der Leitung (42E), welche die Röhre (27E) versorgt, angeordnet flußaufwärtsliegend des Rades (25), eingestochen bzw. eingebohrt ist, flußaufwärtsliegend eines Schiebers (54), welcher die Leitung (42E) steuert, eine Spülschlaucheinrichtung (55), welche mit der Manschette (21) flußabwärtsliegend des Rades (25) verbunden ist, und welche selbst gesteuert wird mittels eines Schiebers (57).

8. Auffangvorrichtung nach einem der Ansprüche 1 bis 7,
**dadurch gekennzeichnet**, daß das Rad (25) drehbar in der Manschette (21) montiert ist, wobei die Röhren (27S, 27E) in dieser befestigt bzw. festgelegt sind.

## Claims

1. Device for intercepting solid elements circulating in a heat exchanger for the cleaning thereof, of the type having, in a sleeve (21) to be interposed on the outlet pipe (15S) of the said heat exchanger (10), filtration means (24) suitable for retaining the said solid elements (18), characterised in that the said filtration means (24) have, on the one hand, a wheel (25) which, transversely closing off the sleeve (21), has, annularly, between its axis (A) and its periphery, a filtering panel (26) and, on the other hand, two nozzles (27S, 27E) which, each disposed respectively on either side of the wheel (25), one downstream in the direction of the outgoing flow, the other upstream, are placed in correspondence with each other and both face towards the filtering panel (26) of this wheel (25), in cooperation with a relative rotation of the wheel (25) with respect to the nozzles (27S, 27E) and circulation means able to generate locally, in line with these nozzles (27S, 27E), a contraflow through the filtering panel (26) of this wheel (25).

2. Interception device according to Claim 1, characterised in that the circulation means (28) include a pump (50) whose outlet is connected to the nozzle (27S) disposed downstream of the wheel (25) .

3. Interception device according to Claim 2, characterised in that the inlet of the pump (50) is connected to the inlet duct (15E) of the heat exchanger (10).

4. Interception device according to Claim 1, characterised in that the circulation means (28) include two pipes (42S, 42E) which, one of them connected to the nozzle (27S) disposed downstream of the wheel (25), and the other connected to the nozzle (27E) disposed upstream of it, both enter by means of an elbow (58S, 58E) into the inlet duct (15E) of the heat exchanger (10), with the elbow (58S) of the first facing upstream and that (58E) of the second facing downstream.

5. Interception device according to any one of Claims 1 to 4, characterised in that the internal volume of the wheel (25), upstream of its filtering panel (26), is circularly divided into compartments (32) by radial partitions (33), and the nozzles (27S, 27E) have in plan view a triangular contour substantially equivalent to one times that of such a compartment (32).

6. Interception device according to any one of Claims 1 to 5, characterised in that each of the nozzles (27S, 27E) is bordered laterally by deflectors (46E, 46S) which have in plan view a triangular contour equivalent to at least one times that of a compartment (32) of the wheel (25).

7. Interception device according to any one of Claims 4 to 6, characterised in that, on the pipe (42E) served by the nozzle (27E) disposed upstream of the wheel (25), there is branched, upstream of a valve (54) controlling this pipe (42E), a washing tube (55), which is connected to the sleeve (21) downstream of the wheel (25), and which is itself controlled by a valve (57).

8. Interception device according to any one of Claims 1 to 7, characterised in that the wheel (25) is rotatably mounted in the sleeve (21), and the nozzles (27S, 27E) are fixed in the latter.
